# EUROPÄISCHE PATENTANMELDUNG

(11) **EP 0 730 897 A2**
(43) Veröffentlichungstag der Anmeldung: **11.09.1996**
(21) Anmeldenummer: 96102578.0
(22) Anmeldetag: 21.02.1996
(51) Int. Cl.: B01D 45/06

(54) **Gerät zur Beseitigung von Flüssigkeit oder Flüssigkeitspartikeln aus einer Luftströmung**

(30) Priorität: 09.03.1995 DE 19508403
(71) Anmelder: Laschitz, Horst, 81476 München (DE)
(72) Erfinder: Laschitz, Horst, 81476 München (DE)
(74) Vertreter: Skuhra, Udo, Dipl.-Ing.

(57) **Zusammenfassung**

Gerät zur Beseitigung von Flüssigkeit oder Flüssigkeitspartikeln aus einer Luftströmung, insbesondere als Zusatzgerät zu einem Staubsauger, bestehend aus einem Behälter mit vorzugsweise abnehmbarem Deckel, dessen Behälter mehrere Lamellen aufweist, die zwischen einem Eintritts- und Austrittsrohr zur Veränderung der Strömungsrichtung innerhalb des Behälters angeordnet sind, wobei das Eintritts- und Austrittsrohr mit seinem innerhalb des Behälters liegenden Rohrabschnitt in Richtung auf den Boden des Behälters gerichtet ist.

## Beschreibung

Die Erfindung betrifft ein Gerät zur Beseitigung von Flüssigkeit oder Flüssigkeitspartikeln aus einer Luftströmung, insbesondere als Zusatzgerät zu einem Staubsauger.

Die DE 645 196 beschreibt eine Vorrichtung zum Klopfen und Reinigen von Teppichen, Decken usw., welche eine hinter das Gebläse geschaltete Kammer aufweist, welche die über das Gebläse vom Teppich oder dergleichen abgesaugte Luftströmung empfängt, nachdem die mit Staubpartikeln oder dergleichen vermischte Luftströmung über eine Mischvorrichtung mit Flüssigkeit, insbesondere Wasser, vermischt worden ist. Die Kammer dient hierbei der Absonderung der Staubpartikeln infolge der Vermischung mit Flüssigkeit wie Wasser, wodurch die Staubpartikel sich zusammen mit dem Wasser in der Kammer absetzen und die Luftströmung separat unter Verwendung von Prallblechen nach oben abgesaugt wird. Die Prallbleche dienen hierbei dazu, die abgesaugte bzw. ausgeblasene Luftströmung möglichst frei von Flüssigkeitspartikeln zu halten.

Der Erfindung liegt die Aufgabe zugrunde, ein Gerät der eingangs genannten Art zu schaffen, das sich insbesondere als Zusatzgerät zu einem Staubsauger zum Absondern bzw. zur Beseitigung von Flüssigkeit oder Flüssigkeitspartikeln eignet und eine Beaufschlagung des Staubsaugers bzw. Staubsaugergebläses mit Flüssigkeitspartikeln ausschließen läßt.

Diese Aufgabe wird erfindungsgemäß durch die Merkmale im Patentanspruch 1 gelöst.

Weitere Ausgestaltungen der Erfindung ergeben sich aus den Unteransprüchen.

Die Erfindung schafft insbesondere ein Zusatzgerät für einen Staubsauger, das ansaugseitig des Staubsaugers zwischen Düse und Staubsaugergebläse angeordnet wird und eine Abtrennung von Flüssigkeit oder Flüssigkeitspartikeln aus der angesaugten Luft sicherstellt, so daß der Staubsauger selbst, nämlich das Staubsaugergebläse und/oder der Staubsaugerbeutel nicht mit Flüssigkeit beaufschlagt werden. Das erfindungsgemäße Gerät läßt sich je nach Bedarf zusätzlich zum vorhandenen Staubsauger verwenden, wenn Flüssigkeit oder mit Flüssigkeit vermischte Staubpartikel aufzusaugen sind.

Nachfolgend wird eine bevorzugte Ausführungsform des erfindungsgemäßen Gerätes anhand der Zeichnungen zur Erläuterung weiterer Merkmale beschrieben. Es zeigen:
Fig. 1 eine vertikale Schnittansicht durch eine bevorzugte Ausführungsform eines Geräts gemäß der Erfindung, und
Fig. 2 eine Draufsicht auf das Gerät gemäß Fig. 1 entsprechend der Schnittlinie II-II' in Fig. 1.

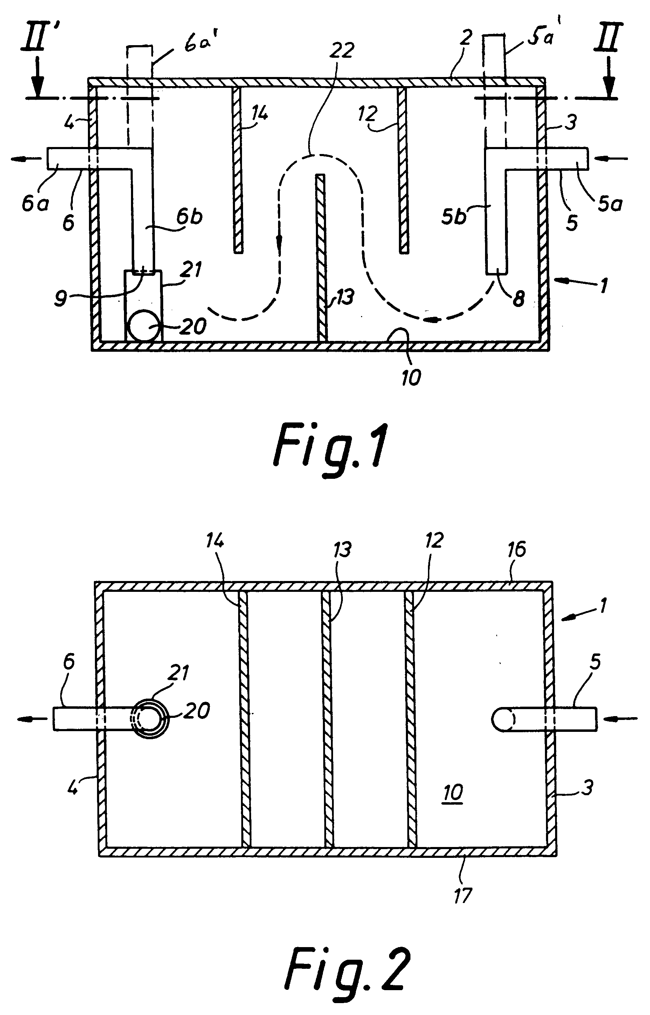

Nachfolgend wird auf die Fig. 1 und 2 Bezug genommen. Gemäß Fig. 1 besteht das erfindungsgemäße Gerät zur Beseitigung von Flüssigkeit oder Flüssigkeitspartikeln aus einer Luftströmung aus einem vorzugsweise viereckigen oder rechteckigen Behälter 1, der durch einen Deckel 2 verschlossen ist. Der Behälter 1 und der Deckel 2 können aus Metall und/oder Kunststoff hergestellt sein. Die Materialauswahl beschränkt sich auf solche Materialien, die flüssigkeitsdicht sind und eine vorgegebene Stabilität gewährleisten.

Der vorzugsweise abnehmbare Deckel 2 verschließt das Innere des Behälters 1 luftdicht, d.h. eine Leckage in den Wandungen des Behälters 1 und in dem Deckel 2 des Behälters 1 soll ausgeschlossen sein.

In einer vorderen und einer hinteren Behälterwand 3 bzw. 4 ist jeweils ein Eintritts- und ein Austrittselement 5, 6 vorgesehen, die vorzugsweise in Form von gebogenen oder rechtwinklig abgebogenen Rohren vorhanden sind.

Aus Fig. 1 ergibt sich, daß das Eintrittsrohr 5 aus einem im wesentlichen horizontalen Rohrabschnitt 5a und einem sich daran anschließenden, im wesentlichen vertikalen Rohrabschnitt 5b besteht. Das Austrittsrohr besteht gleichfalls aus einem im wesentlichen horizontalen Rohrabschnitt 6a und einem im wesentlichen vertikalen Rohrabschnitt 6b. Die weitgehend vertikal ausgerichteten Rohrabschnitte 5b, 6b befinden sich im Inneren des Behälters 1 und halten mit ihren nach unten weisenden Öffnungen 8, 9 einen Abstand zu einem mit 10 bezeichneten Boden des Behälters 1 ein, der so groß ist, daß eine gewisse Flüssigkeitsansammlung oberhalb des Bodens 10 des Behälters 1 erreicht werden kann. Die Öffnungen der Rohre 8, 9 sollen nicht mit dem Flüssigkeitspegel in Kontakt gelangen.

Wie sich durch die in Fig. 1 gezeigten Pfeile ergibt, strömt die mit Schmutzpartikeln oder dergleichen durchsetzte Luft, die zusätzlich Flüssigkeit oder Flüssigkeitspartikel enthält oder die angesaugte Flüssigkeit von seiten des Eintrittsrohres 5a in das Innere des Behälters 1 und wird in eine im wesentlichen vertikal nach unten weisende Richtung durch den Rohrabschnitt 5b umgelenkt, so daß das Luft-Flüssigkeitsgemisch oder die angesaugte Flüssigkeit in Richtung auf den Boden 10 des Behälters 1 verbracht wird.

Im Inneren des Behälters 1 sind verschiedene Lamellen 12, 13, 14 angeordnet. Bei der in Fig. 1 gezeigten Ausführungsform befindet sich mittig im Behälter 1 und quer zur Durchströmungsrichtung eine Lamelle 13 und außermittig zwei Lamellen 12, 14. Die Lamelle 13 hat eine Höhe, die geringer ist als die Höhe des Behälters 1; gleiches trifft für die Lamellen 12, 14 zu. Die Lamelle 13 ist auf den Boden 10 des Behälters 1 aufgesetzt und reicht von der einen Seitenwand 16 zur anderen Seitenwand 17 des Behälters 1, ebenso wie dies hinsichtlich der Lamellen 13 und 14 vorgesehen ist. Auf diese Weise legt die Lamelle 13 einen oberhalb der Lamelle 13 liegenden Strömungsdurchtrittskanal fest, während die Lamellen 12, 14 einen jeweils unterhalb dieser Lamellen 12, 14 befindlichen Strömungskanal definieren. Die aus der Öffnung 8 des Eintrittsrohres 5 austretende Strömung in Form eines Luft-Flüssigkeit-Schmutzpartikel-Gemischs wird somit zuerst auf den Boden 10 des Behälters geleitet und gelangt dann durch den Zwischenraum zwischen den Lamellen 12, 13 in Richtung des Deckels 2, wonach die Strömung umgelenkt wird und durch den Zwischenraum zwischen den Lamellen 13, 14 in Richtung auf das Austrittsrohr 6 geführt wird. Die Luft wird schließlich durch die Öffnung 9 des Austrittsrohres 6 aus dem Behälter 1 gesaugt.

Mit der beschriebenen Anordnung der Lamellen 12, 13, 14 und durch die Umlenkung der Luftströmung infolge der beschriebenen Konfiguration der Eintritts- und Austrittsrohre 5, 6 wird sichergestellt, daß die in dem Luft-Flüssigkeit-Staub-Gemisch befindliche Flüssigkeit im Inneren des Behälters 1 abgesondert wird und sich auf dem Boden 10 des Behälters 1 niederschlägt. Nach der Trennung der Flüssigkeit gegenüber der Luftströmung bzw. dem sich dann ergebenden Luft-Staub-Gemisch wird die Luftströmung über das Austrittsrohr 6 in den nicht dargestellten Staubsauger geführt, in dem dann ggfs. die Abtrennung von Staub erfolgt. Die Lamellen 12, 13, 14 bewirken durch die Umlenkung der Strömung das Absetzen von Flüssigkeit oder Flüssigkeitspartikeln, die durch die Strömungsumlenkung teilweise auf die Lamellen 12, 13, 14 auftreffen und an diesen nach unten in Richtung auf den Boden 10 abtropfen.

Durch die beschriebene Ausbildung der Eintritts- und Austrittsrohre einerseits und durch die Anordnung der Lamellen 12, 13, 14 andererseits wird eine mehrfache Umlenkung der Strömung sichergestellt und dadurch erreicht, daß in zufriedenstellender Weise die in der Strömung enthaltende Flüssigkeit abgesondert wird.

Die unter Bezugnahme auf das Ausführungsbeispiel nach Fig. 1 dargestellte Anordnung und Höhe der Lamellen 12, 13, 14 sowie die Führung der Ein- und Austrittsrohre 5, 6 ist beispielhaft und kann entsprechend der Größe des Behälters 1 und abhängig von der Strömungsgeschwindigkeit der durch den Behälter 1 geführten Strömung dadurch angepaßt werden, daß die Zahl der Lamellen 12-14 erhöht wird, daß deren Höhe vergrößert oder reduziert wird, usw.. Mit zunehmender Zahl von Lamellen 12-14 wird die Fähigkeit der Abtrennung von Flüssigkeit aus der Luftströmung erhöht. Versuche haben aber ergeben, daß bei einem herkömmlichen Staubsauger, insbesondere Industriestaubsauger, die in Fig. 1 dargestellte Anordnung bereits zufriedenstellend arbeitet.

Fig. 2 zeigt eine Draufsicht auf das Gerät nach Fig. 1 und veranschaulicht, daß die Lamellen 12-14 jeweils über die gesamte Breite des Behälters 1 verlaufen. Soweit die Lamellen 12-14 mit den Behälterwandungen 16, 17, dem Behälterboden 10 bzw. dem Deckel 2 in Berührung stehen, ist in diesen Berührungsbereichen eine leckdichte Verbindung vorgesehen, um das Durchströmen der Luftströmung in der unter Verweis auf Fig. 1 beschriebene Strömungslenkung, veranschaulicht durch eine gestrichelte Linie 20, sicherzustellen.

Gemäß einer weiteren Ausführungsform der Erfindung ist an einer der Behälterwände eine Anzeige angeordnet, die den Flüssigkeitspegel der im Behälter 1 befindlichen Flüssigkeit anzeigt. Zusätzlich oder alternativ kann bei einer Ausführungsform der Erfindung ein Ventil im Bereich der Öffnung 9 des Austrittsrohres 6 vorgesehen sein, beispielsweise in Form eines luftgefüllten Kunststoffballes 20, der in einer entsprechenden vertikalen Führung 21 angeordnet ist und der mit steigendem Flüssigkeitspegel in Richtung auf die Öffnung 9 verlagert wird und die Öffnung 9 verschließt, wenn der Flüssigkeitspegel eine entsprechende Höhe erreicht hat. In letzterem Fall wird ein Austritt von Luft aus dem Austrittsrohr 6 in Richtung auf den Staubsauger verhindert, wenn der Flüssigkeitspegel ein vorbestimmtes Niveau überschreitet.

Gemäß einer weiteren Ausführungsform der Erfindung sind die Lamellen 12-14 gegenüber der Vertikalen zumindest teilweise geneigt. Beispielsweise kann die Lamelle 13 gegenüber der Lamelle 12 im Uhrzeigersinn in Fig. 1 geneigt sein, was zu einem reduzierten Querschnitt zwischen den Lamellen 12, 13 führt und in diesem Bereich ein stärkere Trennung der Flüssigkeit aus dem Luftstrom hervorruft.

Gemäß einer weiteren Ausgestaltung des erfindungsgemäßen Geräts sind anstelle der im Verhältnis zur Höhe des Behälters 1 kürzeren Lamellen 12-14 Platten vorgesehen, die über die gesamte Höhe des Behälters 1 gehen und anstelle der in Fig. 1 dargestellten Verkürzungen auf entsprechender Höhe mit Schlitzen oder Durchgangsöffnungen versehen sind, um den in Fig. 1 durch die strichlierte Linie 22 veranschaulichten, von unten nach oben und nach unten zurückverlaufenden kurvenförmigen Strömungsverlauf zu gewährleisten.

Bei dieser Ausführungsform wird somit eine Lamelle oder Platte 12 in einem Bereich nahe dem Behälterboden 10 mit einem oder mehreren Schlitzen oder Öffnungen versehen sein, während die mittige Lamelle oder Platte 13 nahe dem Deckel 2 mit einem oder mehreren Schlitzen oder Öffnungen versehen ist; entsprechend ist bei dieser Gestaltung die Lamelle oder Platte 14 in ihrem Bereich nahe dem Boden 10 mit Schlitzen oder Öffnungen versehen.

Gemäß der dargestellten Ausführungsform sind die Lamellen 12-14 bei einem aus Metall bestehenden Behälter 1 in diesen eingeschweißt. Wird der Behälter 1 aus Kunststoff gefertigt, ist es vorteilhaft, die Lamellen 12 und 14 beispielsweise am Deckel 2 anzuspritzen, während die Lamelle 13 am Behälterboden 10 angespritzt ist.

Alle Ausführungsformen haben gemeinsam, daß durch die nach unten weisenden Rohrabschnitte 5b, 6b die Verweilzeit der Luftströmung im Behälter 1 im Verhältnis zu einer Ausführungsvariante erhöht wird, bei welcher die Eintritts- und Austrittsrohre 5, 6 ohne nach unten weisende Abschnitte 5b, 6b ausgebildet sind. Mit Hilfe der Rohrabschnitte 5b, 6b wird die Luftströmung stark in Richtung auf den Boden 10 verlagert, d.h. der Höhenunterschied der untersten Strömungslinie gegenüber der zwischen den Lamellen 12 und 14 oberen Strömungslinie wird hierdurch maximiert.

Mit dem erfindungsgemäßen Gerät ist es somit möglich, unter Verwendung eines üblichen Staubsaugers, vorzugsweise Industriestaubsaugers, gezielt Flüssigkeit aufzusaugen, ohne eine BeSchädigung des Staubsaugers selbst in Kauf nehmen zu müssen oder den Staubsauger mit einem wasserdichten Staubsaugerbeutel ausrüsten zu müssen. Die Verwendung des erfindungsgemäßen Gerätes ist also nur dann zwingend erforderlich, wenn sich auf dem zu saugenden Boden Flüssigkeit befindet, so daß das Zusatzgerät abgekoppelt werden kann, wenn normale, trockene Böden zu saugen sind.

Mit zunehmender Kompaktheit des erfindungsgemäßen Geräts kann dessen Wirkung dadurch beibehalten werden, daß eine größere Zahl von Lamellen 12 bis 14 entsprechend der Reduzierung des Behälters 1 vorgesehen wird.

Die auf der Außenseite des Behälters 1 befindlichen Öffnungen des Eintrittsrohres 5 und des Austrittsrohres 6 sind vorzugsweise so dimensioniert, daß sie den üblichen Düsenöffnungen bzw. Schlauchöffnungen von Staubsaugerteilen entsprechen.

Die Eintritts- und Austrittsrohrabschnitte 5a' bzw. 6a' sind bei einer abgewandelten Ausführungsform gegenüber den Rohrabschnitten 5b, 6b vertikal nach oben verlängert, wie in Fig. 1 gestrichelt dargestellt ist, so daß in diesem alle das Ansaugrohr mit der Ansaugdüse von oben an den Rohrabschnitt 6a' und das zum Gebläse führende Austrittsrohr an den Rohrabschnitt 5a' von oben angeschlossen werden kann.

Die Rohrabschnitte 5a', 6a' können bei dieser Ausführungsform fest mit dem Deckel 2 verbunden sein und werden beim Aufsetzen des Deckels auf den Behälter 1 automatisch in die jeweilige Position verbracht.

Durch die beschriebene Anordnung von den Lamellen 12-14 und durch die Ausbildung der Eintritts- und Austrittsrohre 5, 6 gemäß der vorstehenden Beschreibung wird der Schwerkrafteffekt im Behälter 1 effektiv ausgenutzt, d.h. daß die Luftströmung zwischen einem Niveau, das etwa dem Boden 10 entspricht, und einem zweiten Niveau, das etwa der Höhe des Deckels 2 entspricht, durch den Behälter geleitet wird. Auf diese Weise wird auch eine effektive Abscheidung der Flüssigkeit oder Flüssigkeitspartikel aus dem Luftstrom gewährleistet.

## Patentansprüche

1. Gerät zur Beseitigung von Flüssigkeit oder Flüssigkeitspartikeln aus einer Luftströmung, insbesondere als Zusatzgerät zu einem Staubsauger,
bestehend aus einem Behälter (1) mit vorzugsweise abnehmbarem Deckel (2),
dessen Behälter (1) mehrere Lamellen (12, 13, 14) aufweist, die zwischen einem Eintritts- und Austrittsrohr (5, 6) zur Veränderung der Strömungsrichtung innerhalb des Behälters (1) angeordnet sind,
wobei das Eintritts- und Austrittsrohr (5, 6) mit seinem innerhalb des Behälters (1) liegenden Rohrabschnitt (5b, 6b) in Richtung auf den Boden (10) des Behälters (1) gerichtet ist.

2. Gerät nach Anspruch 1,
**dadurch gekennzeichnet**,
daß das Eintritts- und das Austrittsrohr (5, 6) jeweils einen im wesentlichen außerhalb des Behälters (1) liegenden horizontalen Rohrabschnitt (5a, 6a) und einen innerhalb des Behälters (1) befindlichen vertikalen Rohrabschnitt (5b, 6b) aufweist.

3. Gerät nach Anspruch 1 oder 2,
**dadurch gekennzeichnet**,
daß die Lamellen (12, 13, 14) als weitgehend vertikale Wände innerhalb des Behälters (1) angeordnet sind und Jeweils einen vorbestimmten Abstand zum Behälterboden (10) oder zum Deckel (2) aufweisen.

4. Gerät nach wenigstens einem der vorhergehenden Ansprüche,
**dadurch gekennzeichnet**,
daß die Lamellen (12, 13, 14) einen etwa sinusförmigen Strömungsverlauf zwischen dem Boden (10) und dem Deckel (2) des Behälters festlegen.

5. Gerät nach wenigstens einem der vorangehenden Ansprüche,
**dadurch gekennzeichnet**,
daß die Lamellen (12, 13, 14) eine der Höhe des Behälters (1) entsprechende Höhe aufweisen und jeweils mit Öffnungen oder Schlitzen nahe dem Boden bzw. dem Deckel versehen sind.

6. Gerät nach wenigstens einem der vorangehenden Ansprüche,
**dadurch gekennzeichnet**,
daß an der zum Boden (10) des Behälters (1) weisenden Öffnung (9) des Austrittsrohres eine Ventileinrichtung (20, 21) vorgesehen ist.

7. Gerät nach wenigstens einem der vorangehenden Ansprüche,
**dadurch gekennzeichnet**,
daß das Eintrittsrohr (5) mit einer Staubsaugerdüse und das Austrittsrohr (6) mit dem Staubsaugergebläse bzw. Staubsaugeranschluß verbunden ist.

8. Gerät nach wenigstens einem der vorangehenden Ansprüche,
**dadurch gekennzeichnet**,
daß das Eintritts- und Austrittsrohr (5, 6) jeweils einen im wesentlichen außerhalb des Behälters (1) liegenden vertikalen Rohrabschnitt (5a', 6a') und einen innerhalb des Behälters (1) befindlichen vertikalen Rohrabschnitt (5b, 6b) aufweist.
